(19) Europäisches Patentamt
European Patent Office
Office européen des brevets

(11) EP 0 571 690 B1

(12) EUROPEAN PATENT SPECIFICATION

(45) Date of publication and mention
of the grant of the patent:
05.03.1997 Bulletin 1997/10

(51) Int Cl.⁶: F03B 11/00, F03B 11/02

(21) Application number: 92830264.5

(22) Date of filing: 27.05.1992

(54) **System for the control of pulses of the hydraulic pressure and power in a reaction hydraulic turbine**

Steuereinrichtung für die Druck- und Leistungsschwankungen in hydraulischen Reaktionsturbinen

Système de contrôle des pulsations de pression et de puissance dans les turbines hydrauliques à réaction

(84) Designated Contracting States:
AT CH DE ES FR GB IT LI SE

(43) Date of publication of application:
01.12.1993 Bulletin 1993/48

(73) Proprietor: ENTE NAZIONALE PER L'ENERGIA
ELETTRICA - (ENEL)
I-00198 Roma (IT)

(72) Inventor: Fanelli, Michele c/o ENEL-CRIS
I-20162 Milano (IT)

(74) Representative: Ferraiolo, Ruggero et al
FERRAIOLO S.r.l.,
Via Napo Torriani, 10
20124 Milano (IT)

(56) References cited:
GB-A- 1 060 395          US-A- 1 950 774

## Description

The present invention concerns a system for the control of pulses of the hydraulic pressure and power in a reaction hydraulic turbine, in particular in a Francis type hydraulic turbine when this last functions under loads different from the nominal load.

For simplicity of demonstration, in the following of this description we refer solely to the Francis turbine.

It is noted that in a Francis turbine under loads greater than or less than the nominal load a circular motion of the water flow at the exit of the rotor blades is generated giving rise in the turbine diffuser to the well noted phenomenon "vortex rope" responsible for pulses of the hydraulic pressure and power of the turbine. These pulses can be amplified by the dynamic characteristics of the turbine and the hydraulic plant in general and compromise the correct functioning of the turbine in certain ranges of load. According to the technique noted the said drawback is obviated empirically by various means, generally defined as means of passive control, such as for example introducing a certain flow of air immediately downstream of the rotor or placing bodies of various shape in the diffuser, suited to break said circular motion. Again to obviate said drawbacks, the applicant has invented a system for the active control of said pulses described in the application for EP-A-0 565 805 (comprised in the state of the art pursuant to Article 54(3) and (4) EPC): a body of defined volume is moved in the elbow of the diffuser of a Francis turbine to make its volume vary, and/or an auxiliary duct extending from the elbow to the piezometric basin, has its inlet aperture controlled by a valve to make an additional flow of water pass into the diffuser, all with the goal of reducing the pressure pulses in the diffuser.

From document US-A- 1 950 774 a turbine is also known of the type presenting an elbow draft tube, which turbine intends to obviate the detrimental effects of the water having greater velocity along the outer portion of the curved path and along the bottom of the horizontal flow than on the inner portion of the elbow and the top of the horizontal flow; an adjustable rise in the bottom floor of the draft tube features this turbine.

The disadvantages of the noted technique are its limited effectiveness, the empirical nature of its employment criteria, a loss of output, mechanical complications, the high cost of installing compressors and/or valves for the regulation of the air flow downstream of the rotor, and the rapid wear of said bodies of various shapes due to cavitation or due to stress caused by vibration. Certain mechanical complications giving effect to the movement of the systems' movable body related to said European patent application may be considered as drawbacks.

In the following of this description the volume which is available to the water in the transfer from the exit of the rotor to the piezometric basin is termed the "volume of the diffuser".

The invention obviates for the major part the drawbacks mentioned above and, as claimed, is a system comprising a first passive means of control capable of causing a first elastic variation in the volume of the diffuser under hydraulic pressure and a second active means of control capable of causing a second variation in the volume of the diffuser by means of the controlled injection of air into the diffuser downstream of said first means, said first means comprising a section of the diffuser made from elastic material having elastic characteristics, thickness and length chosen as a function of the pressure pulses revealed in the diffuser in the absence of every device for the control of the vortex rope phenomenon, while the quantity of air to be introduced is chosen on the basis of the effectiveness of said first means, in a certain sense, as a means to obtain the adjustment of effects caused by said first means.

The principal advantage of the system is that it provides an effective reduction of the "vortex rope" phenomenon substantially by means of a totally static means.

One way of implementing the system is described in detail as follows with reference to the schematic drawings attached in which

FIG.1 is a partially sectioned vertical view,
FIG.2 is an auxiliary scheme, and
FIG3 is a diagram that represents the functioning of the means invented.

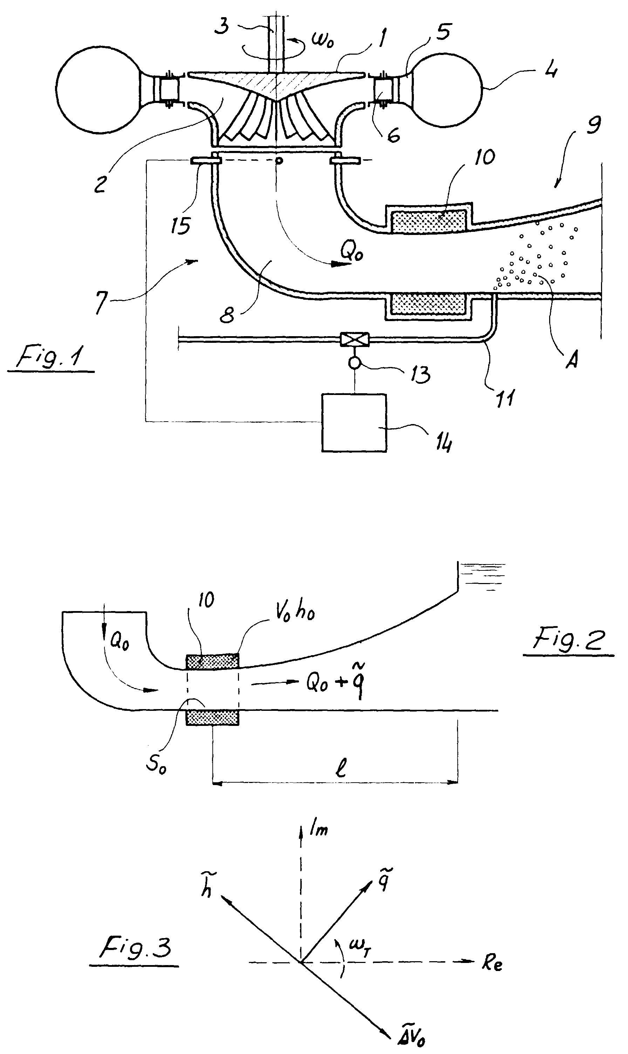

Fig. 1 shows the rotor 1 of a Francis turbine, with its blades 2, shaft 3 that turns at a velocity $\omega_0$, the volute 4, fixed blade pre-distributor 5, the movable blade distributor 6 and the diffuser 7 with elbow 8. At the end of the elbow, where the diverging section 9 begins a section of the internal surface of the elbow is made of a sleeve 10 which is a sheet of elastomer. Downstream of said sleeve a compressed air duct 11 delivers compressed air A to the elbow through a regulator valve 12 controlled by an actuator 13 in turn controlled by a processor 14 that processes signals sent from pressure transducers 15 positioned immediately downstream of the rotor 1.

The characteristics of the sleeve 10 (elastic characteristic, length, thickness) can be defined experimentally, but also theoretically established, as reported briefly following to also make known what response must be given by said sleeve. To simplify the reading of the explanation that follows it is useful to refer to diagram FIG.2.

Given that:

$V_0$ = the volume of the sleeve at rest,

$s_0$ = the internal surface area of the sleeve,
$D = \ell/2gs_0$,
$h_0$ = compressibility constant,
$h_2$ = the piezometric pressure near the sleeve 10,
$i = \sqrt{-1}$

The sleeve 10 interacts with the fixed volume of the elbow with its variable volume $V_0$, because it features an elastic compressibility:

$$\Delta V/\Delta h = -V_0/h_0 = -P.$$

(if, in addition to said sleeve there were a free surface area $S_h$, for example, given by a piezometric tube that leaves from the diverging section, then we would have

$$P = \cfrac{1}{\cfrac{1}{S_h} + \cfrac{h_0}{V_0}}\; )$$

Under variations of pressure $h_2$, this sleeve gives rise to a pulsing flow of water

$$\tilde{q} = \frac{\Delta V}{\Delta t} \simeq \frac{\Delta V}{\Delta h} \cdot \frac{dh}{dt} = i\,\omega_0\, P\, \tilde{h}_2$$

and, since $\hat{q}$ is also expressed as

$$\tilde{q} \cong \tilde{h}_2 / Z_d$$

(where $Z_d$ is the entry impedance of the diffuser expressed by $Z_d = i\omega_0 D$), then we obtain

$$P = \frac{i}{\omega_0^2 \cdot D} = \frac{2gs_0}{\omega_0^2 \cdot \ell}$$

and, given that $V_0 = h_0 \cdot P$, the elastic sleeve 10 must have a volume

$$V_0 = \frac{ih_0}{\omega_0 Z_d} = \frac{h_0}{\omega_0^2 \cdot D} = \frac{2gh_0 s_0}{\omega_0^2 \cdot \ell}$$

(Note: Fig 2 shows that in the diffuser there will be a total flow $Q_0 + \hat{q}$ )

The surface of said sleeve exposed to the water is protected against abrasion by, for example, a close fitting perforated sheet cylinder.

The quantity of air that is let into the elbow is determined by the opportunity of introducing a supplementary correction to the passive action of said elastic sleeve, above all to obviate the non linear effects that are not taken into account in the formulae reported above; through the feedback circuit represented in Fig.1 it is possible to minimise the residual pressure oscillations below the rotor 1, where the pressure transducers 15 are installed.

Fig.3 is a rotating vector diagram ($R_e$ being the abscissa for the real components and $I_m$ being the ordinate for the imaginary components) that illustrates the functioning of the two invented devices and is self explanatory when we consider that

$$\tilde{h} = \frac{i\,\omega_T\,\ell}{2g\,\epsilon_0}\,\tilde{q}\,; \qquad \tilde{q} = i\,\omega_T\,\Delta\tilde{V}_0\,; \qquad \Delta\tilde{V}_0 = -\frac{V_0}{h_0}\,\tilde{h}$$

## Claims

1. A system for controlling the pulses of hydraulic pressure and power in a reaction hydraulic turbine by means of the controlled variations of the volume of the diffuser (7) **characterized** in that two control means are comprised, the first of which is an elastic section (10) in the diffuser set at the end of the elbow (8) at the beginning of the diffuser diverging section (9) made as a sleeve of elastic material (10) capable of elastically yelding under the variations of hydraluic pressure to produce a first intended controlled variation of volume of the diffuser, the second of which being a controlled injection of air (A) into the diffuser, downstream of said elastic section (10), to produce a second intended variation of volume of the diffuser so obtaining an adjustment of the effect of the first control means (10).

2. A system according to claim 1 characterized in that said sleeve of elastic material (10) is the same as a variable volume V the value of which at rest is expressed by $V_0$ and the elastic compressibility of which is given by:

$$\Delta V/\Delta h = - Vo/ho = - p.$$

3. A system according to claim 1 characterized in that said second control means (A) is controlled by a system of counter-reaction regulation checked by the measurement of the pulsating pressure performed below the turbine rotor (1).


## Patentansprüche

1. System zum Steuern der hydraulischen Druck- und Leistungsimpulse in einer hydraulischen Reaktionsturbine durch gesteuerte Veränderungen des Volumens des Diffusors (7),
dadurch **gekennzeichnet**, daß zwei Steuermittel vorgesehen sind, von denen das erste ein elastischer Abschnitt (10) in der Diffusoreinheit am Ende des Knies (8) am Beginn des divergierenden Diffusorabschnitts (9) ist, der als Hülse aus elastischem Material (10) ausgebildet ist, die unter den hydraulischen Druckänderungen elastisch nachgeben kann zur Erzeugung einer ersten beabsichtigten gesteuerten Veränderung des Volumens des Diffusors, und von denen das zweite aus einer gesteuerten Injektion von Luft (A) in den Diffusor stromabwärts des elastischen Abschnitts (10) besteht zur Erzeugung einer zweiten beabsichtigten Volumenänderung des Diffusors, um so eine Einstellung des Effekts des ersten Steuermittels (10) zu erhalten.

2. System nach Anspruch 1,
dadurch **gekennzeichnet**, daß die Hülse aus elastischem Material (10) gleich einem variablen Volumen (V) ist, dessen Wert in Ruhe durch ($V_0$) ausgedruckt ist und dessen elastische Komprimierbarkeit gegeben ist durch $\Delta V/\Delta h$ = -Vo/ho = -p.

3. System nach Anspruch 1,
dadurch **gekennzeichnet**, daß das zweite Steuermittel (A) durch ein Gegenreaktions-Regelungssystem gesteuert ist, das durch eine unterhalb des Turbinenrohrs (1) durchgeführte Messung des pulsierenden Drucks kontrolliert wird.


## Revendications

1. Système pour commander les impulsions de pression et de puissance hydrauliques dans une turbine hydraulique à réaction, au moyen des variations de volume contrôlées du diffuseur (7),
caractérisé par
deux moyens de commande dont le premier est une section élastique (10) formée dans l'ensemble de diffuseur à l'extrémité du coude (8) et au début de la section divergente (9) du diffuseur, cette section étant réalisée sous la forme d'un manchon de matériau élastique (10) capable de fléchir élastiquement sous les variations de la pression hydraulique pour produire une première variation de volume contrôlée voulue du diffuseur, et dont le second est une injection contrôlée d'air (A) dans le diffuseur, en aval de la section élastique (10), pour produire une seconde variation de volume voulue du diffuseur de manière à obtenir un réglage de l'effet du premier moyen de commande (10).

2. Système selon la revendication 1,
caractérisé en ce que
le manchon de matériau élastique (10) est le même qu'un volume variable V dont la valeur au repos s'exprime par Vo et dont la compressibilité élastique est donnée par : $\Delta V/\Delta h = -Vo/ho = -p$.

3. Système selon la revendication 1,
caractérisé en ce que
le second moyen de commande (A) est commandé par un système de régulation à rétroaction contrôlé par la mesure de la pression pulsée effectuée au-dessous du rotor de turbine (1).

_Fig.1_

_Fig.2_

_Fig.3_